# EUROPÄISCHE PATENTSCHRIFT

(11) **EP 3 959 956 B1**
(45) Veröffentlichungstag und Bekanntmachung des Hinweises auf die Patenterteilung: **24.07.2024**
(21) Anmeldenummer: 20192738.1
(22) Anmeldetag: 25.08.2020
(51) Int. Cl.: A01C 23/00

(54) **VERTEILVORRICHTUNG FÜR FESTSTOFFHALTIGE FLÜSSIGKEITEN, INSBESONDERE GÜLLE, UND DESSEN HERSTELLUNGSVERFAHREN**
DISTRIBUTING DEVICE FOR LIQUIDS CONTAINING SOLIDS, IN PARTICULAR MANURE, AND ITS METHOD OF PRODUCTION
DISPOSITIF DE DISTRIBUTION POUR LIQUIDES CONTENANT DES SOLIDES, EN PARTICULIER LE FUMIER, ET SON PROCÉDÉ DE PRODUCTION

(43) Veröffentlichungstag der Anmeldung: 02.03.2022
(73) Patentinhaber: Brunner Spezialwerkstatt AG, 9536 Schwarzenbach SG (CH)
(72) Erfinder: Hollenstein, Thomas, 9246 Niederbüren (CH)
(74) Vertreter: Hepp Wenger Ryffel AG

(56) Entgegenhaltungen:
- CH-A5- 653 522
- DE-C- 823 962
- DE-U1- 202019 105 159
- DE-U1- 29 615 579
- FR-A- 683 130

## Beschreibung

Die Erfindung betrifft eine Verteilvorrichtung und ein Verfahren zur Herstellung einer Verteilvorrichtung für feststoffhaltige Flüssigkeiten, insbesondere Gülle, gemäss den unabhängigen Ansprüchen.

Aus dem Stand der Technik ist bekannt, dass bei der Gülleausbringung hohe Ammoniakemissionen freigesetzt werden, die nicht nur eine hohe Geruchsbelastung sondern auch einen beträchtlichen Verlust an Dünger zur Folge haben, der nicht in den Boden gelangt. Um dies zu vermeiden werden immer mehr bodennahe Ausbringtechniken eingesetzt. Diese haben den Vorteil, dass durch die Nähe zum Boden sowohl die Geruchsemissionen stark abnehmen als auch die Stickstoffverluste auf ein Minimum reduziert werden. Im Stand der Technik sind hierzu ganz unterschiedliche bodennahe Ausbringtechniken beschrieben, die technisch sehr aufwändig ausgeführt sind.

Aus der DE 20 2017 001 292 U1 ist ein sogenannter Schleppschlauchverteiler zur streifenförmigen, gleichmässigen und umweltfreundlichen Ablage von Wirtschaftsdünger auf zu düngenden Bodenflächen bekannt.

Der Nachteil solcher Schleppschlauchverteiler besteht darin, dass ihr Aufbau sehr komplex und die Herstellung dadurch sehr zeitaufwendig und kostenintensiv ist. Des Weiteren ist eine hohe Komplexität auch immer sehr störungsanfällig und wartungsintensiv.

Ein anderes Beispiel für eine bodennahe Ausbringtechnik ist der in EP 3 251 480 B1 beschriebene Scheibenschlitzverteiler. In diesem Fall wird Gülle über Schläuche zu den einzelnen Scheiben des Scheibenschlitzverteilers befördert. Die einzelnen Scheiben des Scheibenschlitzverteilers furchen ein zu bearbeitendes Feld und ermöglichen dadurch die Aufnahme der zugeführten Gülle. Weitere Verteilvorrichtungen für Gülle sind offenbart in DE 823 962 C,FR 683 130 A und CH 653 522 A5.

Der Nachteil hier besteht darin, dass dem Scheibenschlitzverteiler eine Mechanik zugrunde liegt, die sehr wartungsintensiv ist. Es ist die Aufgabe der vorliegenden Erfindung, eine Verteilvorrichtung für feststoffhaltige Flüssigkeiten zu schaffen, welche die Nachteile des Stands der Technik überwindet und insbesondere eine robuste Verteilvorrichtung und ein Verfahren zur Herstellung einer solchen Verteilvorrichtung zu schaffen, so dass ein bodennaher Austrag der feststoffhaltigen Flüssigkeiten ohne wartungsintensive und fehleranfällige Verteilvorrichtungen erfolgt. Erfindungsgemäss umfasst die Verteilvorrichtung für feststoffhaltige Flüssigkeiten, insbesondere Gülle, mindestens eine Einlassöffnung zum Einleiten von feststoffhaltigen Flüssigkeiten, eine Mehrzahl von Auslässen und eine Mehrzahl von Rinnen. Die Rinnen sind hierbei konkav ausgebildet. Jede der Rinnen weist ein erstes Ende im Bereich des Einlasses und ein zweites Ende im Bereich des Auslasses auf, wobei die Rinnen im Bereich des Auslasses tiefer sind als im Bereich des Einlasses. Weiter laufen die Rinnen im Bereich des Einlasses auf einen gemeinsamen Punkt zu.

Die Bandbreite der möglichen verteilbaren feststoffhaltigen Flüssigkeiten, insbesondere Gülle, die hauptsächlich aus Urin und Kot landwirtschaftlicher Nutztiere bestehen, reicht von Dick- oder Dünngülle, Schwemmmist bis zu Flüssigmist bzw. Jauche.

Die Ausbringmenge kann durch verschiedene Einlassquerschnitte, insbesondere verschiedene Durchmesser der Einlassöffnung, angepasst werden.

Die konkav ausgebildeten Rinnen weisen je zwei Kanten auf, an denen die feststoffhaltigen Flüssigkeiten entlang fliessen, wobei sich benachbarte Rinnen je eine Kante teilen.

Die Rinnen verlaufen von einem gemeinsamen Ausgangspunkt am Einlass der feststoffhaltigen Flüssigkeiten, der sich auf einem höheren Niveau befindet, zu den Auslassöffnungen, die sich auf einem niedrigeren Niveau befinden.

Der Vorteil einer solchen Verteilvorrichtung besteht darin, dass die feststoffhaltigen Flüssigkeiten mittels der Rinnenkanten in diskrete Ströme aufgeteilt werden, die dann ohne grösseren Verlust an feststoffhaltigen Flüssigkeiten an die Umgebung in den Boden eingeleitet werden. Ausserdem handelt es sich hierbei um eine robuste und nahezu wartungsfreie Verteilvorrichtung, die insbesondere keine rotierenden Bauteile benötigt.

Erfindungsgemäß entspricht die Grundform im Bereich der Rinnen im Wesentlichen derjenigen eines Kegelsektors oder eines Kegelkeils, mit einer Kegelsektorspitze bzw. Kegelkeilspitze, einer Kegelsektorgrundfläche und einer einfachen oder doppelt gekrümmten Mantelfläche.

Die Grundform eines Kegelsektors oder eines Kegelkeils bietet den Vorteil einer ausreichend guten Auffächerung sowie einer genauen Verteilung der feststoffhaltigen Flüssigkeiten, um eine punktuelle Überschwemmung des Bodens mit feststoffhaltigen Flüssigkeiten zu vermeiden und eine gute Aufnahmefähigkeit des Bodens garantieren zu können.

Vorzugsweise ist die Einlassöffnung auf die Rinnen, insbesondere auf die Kegelsektorspitze bzw. Kegelkeilspitze ausgerichtet.

Auf diese Art und Weise ist es möglich die feststoffhaltigen Flüssigkeiten in gleichmässige diskrete Ströme aufzuteilen, die dem Boden zugeführt werden können und die dieser gut aufnehmen kann.

Vorzugsweise weisen der Kegelsektor bzw. der Kegelkeil einen Sektorwinkel bzw. Keilwinkel von ≤ 180° auf und/oder eine Kegelsektorhöhe bzw. Kegelkeilhöhe zwischen 10 cm und 80 cm, vorzugsweise zwischen 12 cm und 30 cm und/oder einen Kegelsektorradius zwischen 8 cm und 30 cm, vorzugsweise zwischen 10 cm und 20 cm.

Ein Kegelsektor bzw. Kegelkeil mit Massen in den genannten Bereichen führt zu einer besonders gleichmässigen Aufteilung der feststoffhaltigen Flüssigkeiten in diskrete Ströme und dadurch zu einem geringen Verlust der feststoffhaltigen Flüssigkeiten an die Umgebung.

Vorzugsweise sind die Rinnen als Vertiefungen in der Mantelfläche ausgebildet. Die Rinnen sind hierbei im Wesentlichen in Längsrichtung des Kegelsektors bzw. -keils angeordnet und konkav ausgebildet. Weiter sind die Rinnen auf die Kegelsektorspitze bzw. Kegelkeilspitze zulaufend ausgebildet, wobei die Tiefe der Rinnen vorzugsweise kontinuierlich von der Kegelsektorspitze zur Kegelsektorgrundfläche, bzw. von der Kegelkeilspitze zur Kegelkeilgrundfläche, zunimmt.

Der Vorteil derart ausgestalteter Rinnen besteht darin, dass die feststoffhaltigen Flüssigkeiten schnell in diskrete Ströme aufgeteilt und in den Boden eingebracht werden.

Vorzugsweise sind die Rinnen mit den Auslässen fluidverbunden.

Als Auslässe können Öffnungen jeglicher Art, sowie Ventile, Düsen oder dergleichen dienen.

Hierdurch können die in den Rinnen in diskrete Ströme aufgeteilten feststoffhaltigen Flüssigkeiten über die fluidverbundenen Auslässe von den Rinnen in den Boden eingeleitet werden.

Vorzugsweise ist im Bereich des Einlasses eine Kupplung für einen Schlauch ausgebildet, beispielsweise in Form einer Schlauchtülle oder Schlauchklemme.

Mittels der Kupplung können die feststoffhaltigen Flüssigkeiten aus den standardmässig verwendeten Vorratsbehältnissen ohne weitere Vorbehandlungsprozesse, wie beispielsweise ein Vorfiltrieren, direkt in die Verteilvorrichtung geleitet werden.

Vorzugsweise ist die Verteilvorrichtung einstückig ausgebildet.

Der Vorteil einer einstückigen Verteilvorrichtung ist ein einfaches und schnelles Herstellen. Ausserdem ist eine solche Verteilvorrichtung besonders robust und wartungsarm.

Vorzugsweise wird die Verteilvorrichtung im Wesentlichen aus Polyamid, bevorzugt Polyamid 12 hergestellt.

Diese Materialien zeigen bei der Verteilung der feststoffhaltigen Flüssigkeiten eine hohe Stabilität und Beständigkeit. Ausserdem sind die genannten Materialien einfach in der Verarbeitung.

Vorzugsweise ist im Bereich der Auslässe eine zusätzliche Leitfläche anbringbar, an der Leitelemente zur Verlängerung der Rinnen angeordnet sind.

Eine Verlängerung der Rinnen bietet die Möglichkeit die Auftragsbreite der feststoffhaltigen Flüssigkeiten auf die Bodenoberfläche mittels der Länge der Leitelemente nach Bedarf einzustellen.

Vorzugsweise sind die Leitfläche und die Leitelemente aus Metall und/oder Kunststoff ausgebildet.

Diese Materialien bieten ausreichend Stabilität, um die feststoffhaltigen Flüssigkeiten in diskreten Strömen in den Boden einzuleiten.

Vorzugsweise sind zwischen den Rinnen im Bereich der Auslässe Schlitze vorhanden, in welche die Leitelemente eingreifen.

Die Schlitze bieten die Möglichkeit eine standardisierte Verteilvorrichtung durch die Verlängerung der Rinnenkanten nach Wunsch an die Bodenbegebenheiten anzupassen, beispielsweise an eine waagrechte oder geneigte Oberfläche.

Vorzugsweise sind die Schlitze und die Leitelemente derart ausgebildet, dass die Leitelemente im Bereich der Auslässe die Rinnen in Längsrichtung des Kegels nicht überragen.

Dies ist besonders vorteilhaft, da Feststoffe der feststoffhaltigen Flüssigkeiten nicht am Übergang der Rinne zu den Leitelementen hängen bleiben.

Vorzugsweise ist die Verteilvorrichtung in einem Gehäuse angeordnet.

Der Vorteil eines Gehäuses besteht darin, dass nahezu die gesamte Menge der feststoffhaltigen Flüssigkeiten in den Boden eingebracht wird und nicht an die Umgebung verloren geht.

Die Aufgabe wird weiter durch ein Verfahren zur Herstellung einer Verteilvorrichtung für feststoffhaltige Flüssigkeiten nach einem der vorangehenden Ansprüche gelöst, wobei die Verteilvorrichtung mittels additiver Fertigung, insbesondere mittels eines 3D-Druckverfahrens hergestellt wird.

Die Herstellung unter Verwendung eines additiven Fertigungsverfahrens, wie beispielsweise des 3D-Druckverfahrens, ist besonders vorteilhaft, da mittels additiver Fertigung die Verteilvorrichtung einstückig ohne Materialverlust hergestellt werden kann. Ein weiterer Vorteil der Verwendung der additiven Fertigung besteht darin, dass keine weiteren Fertigungsschritte, wie beispielsweise ein Vorbereitungsschritt, oder eine Nachbearbeitung notwendig sind.

Die Ausbringmenge kann durch verschiedene Einlassquerschnitte, insb. Durchmesser, angepasst werden.

Die Erfindung wird im Folgenden anhand von Ausführungsbeispielen in Figuren weiter erläutert. Hierbei zeigen:
- Figur 1a:: Perspektivische Darstellung einer Verteilvorrichtung in einer ersten Ausführungsform,
- Figur 1b:: Vorderansicht der in Figur 1 gezeigten Ausführungsform der Verteilvorrichtung,
- Figur 1c:: Seitenansicht der in Figur 1 gezeigten Ausführungsform der Verteilvorrichtung,
- Figur 1d:: Draufsicht der Darstellung der in Figur 1 gezeigten Ausführungsform der Verteilvorrichtung,
- Figur 2:: Draufsicht der in Figur 1 gezeigten Ausführungsform der Verteilvorrichtung mit Leitelementen.
- Figur 3a:: Teilansicht der in Figur 2 gezeigten Ausführungsform der Verteilvorrichtung mit Leitelementen.
- Figur 3b:: Ansicht eines Auslasselements der in Figur 1 gezeigten Leitelemente.

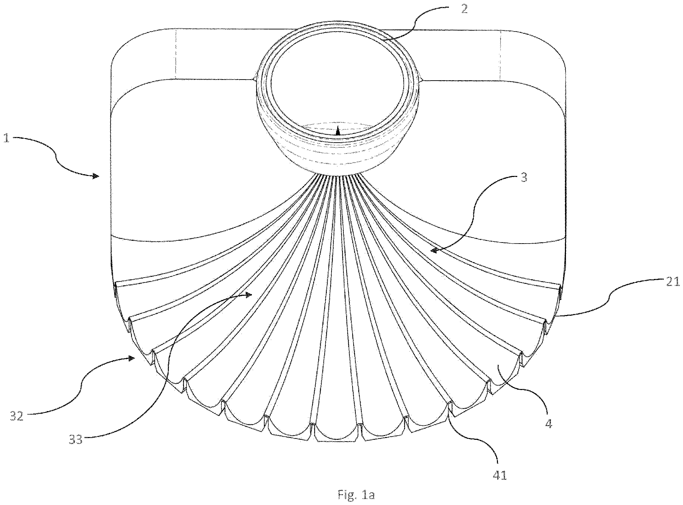

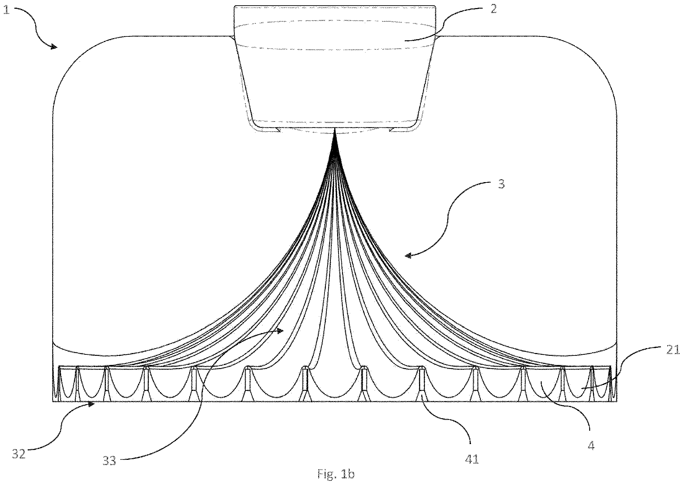

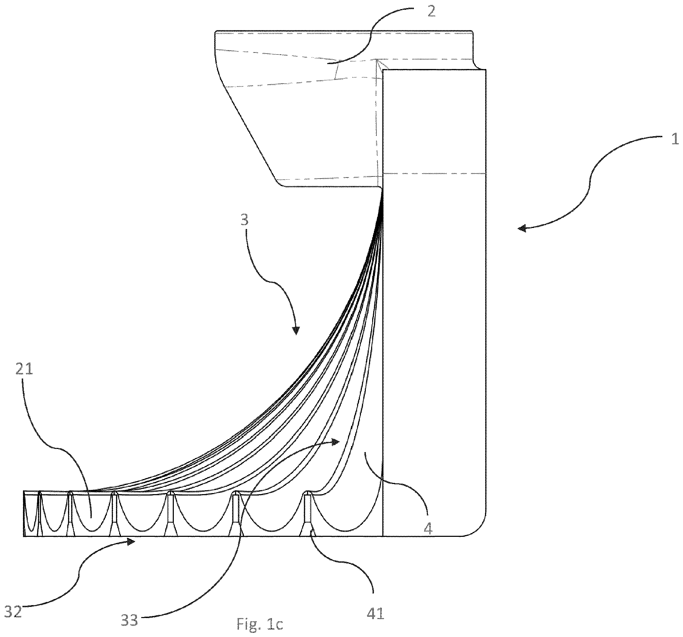

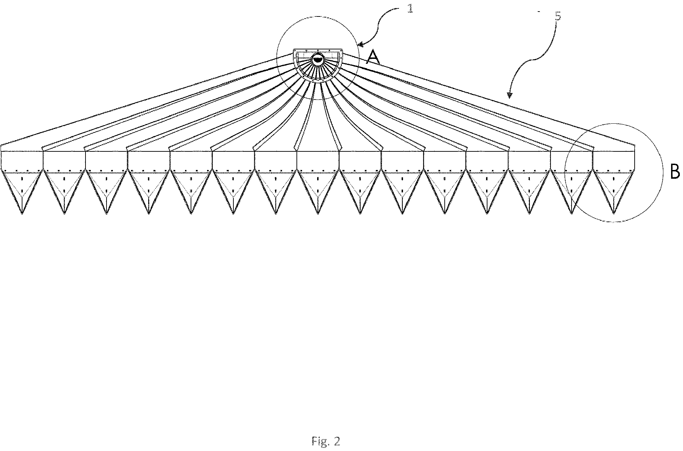

Eine in Figur 1a, 1b und 1c dargestellte Verteilvorrichtung 1 dient zur Verteilung von feststoffhaltigen Flüssigkeiten. Die Verteilvorrichtung 1 besitzt die Form eines Kegelsektors 3, an dessen Kegelsektorspitze 31 (hier nicht zu sehen, siehe Fig. 2) eine Mehrzahl von konkaven Rinnen 4 zusammenlaufen. Über der Kegelsektorspitze 31 befindet sich eine Einlassöffnung 2 über die die feststoffhaltigen Flüssigkeiten in die Verteilvorrichtung 1 eingeleitet werden. Über den Einlass der Rinnen 4, die an der Kegelsektorspitze 31 zusammenlaufen, werden die feststoffhaltigen Flüssigkeiten über die Rinnen 4, zu deren Auslässe 21 geleitet, welche sich relativ zur Kegelsektorspitze 31 auf einem vergleichsweise tieferen Niveau befinden. Hierbei liegen die Rinnen 4 als Vertiefung in einer gekrümmten Mantelfläche 33 des Kegelsektors 3 in Längsrichtung des Kegelsektors 3 und die Auslässe 21 auf einer Kegelsektorgrundfläche 32. Die Tiefe der Rinnen 4 nimmt hierbei kontinuierlich von der Kegelsektorspitze 31 zur Kegelsektorgrundfläche 32 zu. Zwei nebeneinanderliegende Rinnen 4 bilden eine Erhöhung aus an der eine Öffnung in Form eines Schlitzes 41 ausgebildet ist. Die Verteilvorrichtung 1 ist einstückig aus einem Polyamid 12 gefertigt.

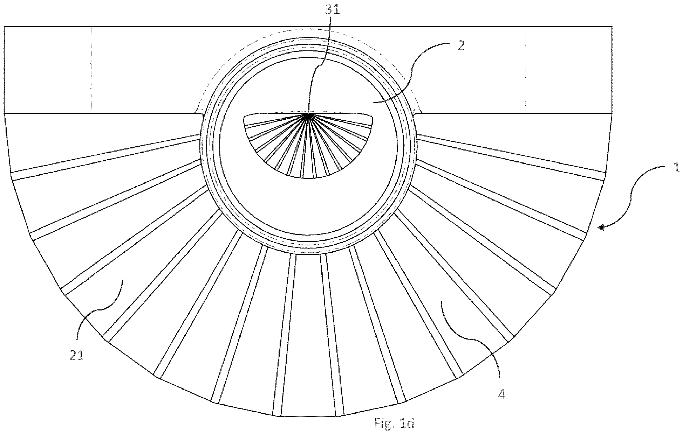

Figur 1d zeigt eine Einlassöffnung 2 einer Verteilvorrichtung 1 an der mittels Schnellkupplung einer Leitung angeschlossen wird, über die feststoffhaltige Flüssigkeiten in die Verteilvorrichtung 1 eingeleitet werden. Hinter der Einlassöffnung 2 befindet sich eine Kegelsektorspitze 31, von der aus eine Mehrzahl von konkaven Rinnen 4 zu je einem Auslass 21 führen. Die Auslässe 21 sind hier mittels einer Öffnung ausgebildet, durch die die feststoffhaltigen Flüssigkeiten die Verteilvorrichtung 1 in Form von diskret aufgeteilten Strömen verlassen. Die Anzahl der Öffnungen ist abhängig von der Arbeitsbreite und kann deshalb variabel ausgestaltet werden. Figur 2 zeigt eine Verteilvorrichtung 1 zur Verteilung von feststoffhaltigen Flüssigkeiten inklusive einer zusätzlichen Leitfläche 5.

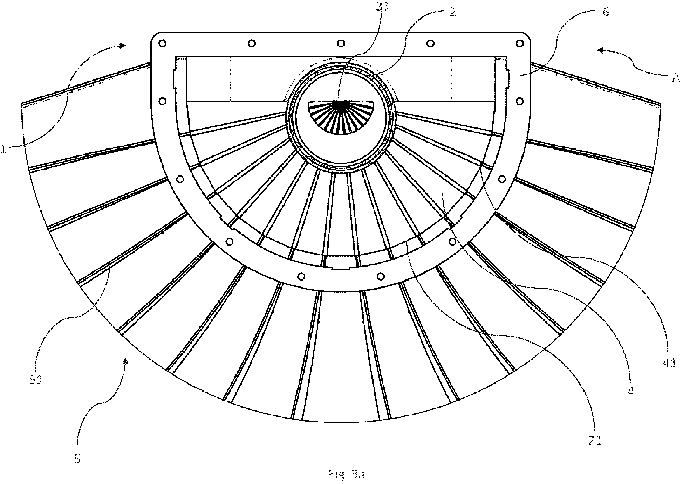

Figur 3a zeigt die Vergrösserung des in Figur 2 dargestellten Bereichs A. Mittels einer Einlassöffnung 2 werden feststoffhaltige Flüssigkeiten in die Verteilvorrichtung 1 eingeleitet und über von einer Kegelspitze 31 wegführende Rinnen 4, zu einer Mehrzahl an Auslässen 21 weitergeleitet. In einer Erhebung zwischen zwei benachbarten Rinnen 4 befinden sich Schlitze 41 (siehe auch Fig. 1) an denen Leitelemente 51 zur Verlängerung der Rinnen 4 angeordnet sind. Hierbei sind die Leitelemente 51 aus Metall ausgebildet. Mittels der zusätzlichen Leitfläche 5 und der darauf angeordneten Leitelemente 51 wird die Verteilvorrichtung 1 derart modifiziert, dass die Verteilvorrichtung 1 an die jeweilige Beschaffenheit des Bodens angepasst werden kann in den die feststoffhaltigen Flüssigkeiten eingeleitet werden. Mittels eines Flansches 6 ist an der Verteilvorrichtung 1 ein Deckel anbringbar, mit einem Einlass für die feststoffhaltige Flüssigkeit.

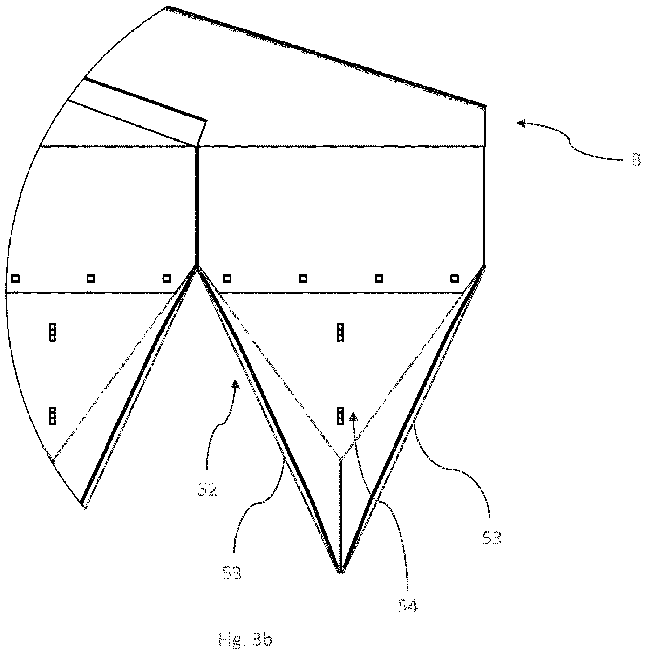

Figur 3b zeigt die Vergrösserung des in Figur 2 dargestellten Bereichs B. Dargestellt sind Auslasselemente 52, die hier in Form von zwei schräg zulaufenden Seitenwänden 53 ausgebildet sind. Die Seitenwände 53 bilden eine Öffnung 54 aus, die einen diskreten Austrag der feststoffhaltigen Flüssigkeiten auf die Bodenoberfläche zulässt.

## Patentansprüche

1. Verteilvorrichtung (1) für feststoffhaltige Flüssigkeiten, insbesondere Gülle, umfassend
- mindestens eine Einlassöffnung (2) zum Einleiten von feststoffhaltigen Flüssigkeiten,
- eine Mehrzahl von Auslässen (21), und
- eine Mehrzahl von Rinnen (4),
wobei die Rinnen (4) konkav ausgebildet sind,
wobei jede der Rinnen (4) ein erstes Ende im Bereich des Einlasses (2) und ein zweites Ende im Bereich des Auslasses (21) aufweist,
**dadurch gekennzeichnet, dass** die Rinnen (4) im Bereich des Auslasses (21) tiefer sind als im Bereich des Einlasses (2), und
wobei die Rinnen (4) im Bereich des Einlasses (2) auf einen gemeinsamen Punkt (31) zulaufen, und
wobei die Grundform im Bereich der Rinnen (4) im Wesentlichen derjenigen eines Kegelsektors oder eines Kegelkeils (3) entspricht, mit einer Kegelsektorspitze bzw. Kegelkeilspitze (31), einer Kegelsektorgrundfläche (32) und einer einfachen oder doppelt gekrümmten Mantelfläche (33).

2. Verteilvorrichtung gemäss Anspruch 1, **dadurch gekennzeichnet, dass** die Einlassöffnung (2) auf die Rinnen (4), insbesondere auf die Kegelsektorspitze bzw. Kegelkeilspitze (31) ausgerichtet ist.

3. Verteilvorrichtung gemäss einem der vorangehenden Ansprüche, **dadurch gekennzeichnet, dass** der Kegelsektor bzw. der Kegelkeil (3) aufweist:
- einen Sektorwinkel bzw. Keilwinkel von ≤ 180°, und/oder
- eine Kegelsektorhöhe bzw. Kegelkeilhöhe zwischen 10 cm und 80 cm, vorzugsweise zwischen 12 und 30 cm, und/oder
- einen Kegelsektorradius zwischen 8 cm und 30 cm, vorzugsweise zwischen 10 und 20 cm.

4. Verteilvorrichtung gemäss einem der vorangehenden Ansprüche, **dadurch gekennzeichnet, dass** die Rinnen (4) als Vertiefungen in der Mantelfläche (33) ausgebildet sind,
wobei die Rinnen (4) im Wesentlichen in Längsrichtung des Kegelsektors bzw. -keils (3) ausgebildet sind,
wobei die Rinnen (4) konkav ausgebildet sind,
wobei die Rinnen (4) auf die Kegelsektorspitze bzw. Kegelkeilspitze (31) zulaufend ausgebildet sind,
wobei die Tiefe der Rinnen (4) vorzugsweise kontinuierlich von der Kegelsektorspitze (31) zur Kegelsektorgrundfläche, bzw. von der Kegelkeilspitze (31) zur Kegelkeilgrundfläche, zunimmt.

5. Verteilvorrichtung gemäss einem der vorangehenden Ansprüche, **dadurch gekennzeichnet, dass** die Rinnen (4) mit den Auslässen (21) fluidverbunden sind.

6. Verteilvorrichtung gemäss einem der vorangehenden Ansprüche, **dadurch gekennzeichnet, dass** im Bereich des Einlasses (2) eine Kupplung für einen Schlauch ausgebildet ist.

7. Verteilvorrichtung gemäss einem der vorangehenden Ansprüche, **dadurch gekennzeichnet, dass** die Verteilvorrichtung (1) einstückig ausgebildet ist.

8. Verteilvorrichtung gemäss einem der vorangehenden Ansprüche, **dadurch gekennzeichnet, dass** die Verteilvorrichtung (1) im Wesentlichen aus Kunststoff, vorzugsweise aus Polyamid, besonders bevorzugt aus Polyamid 12, oder aus Metall oder einer Metalllegierung, insbesondere aus Aluminium, Zink oder Magnesium bzw. aus einer Aluminiumlegierung, einer Zinklegierung oder Siliziumtombak ausgebildet ist.

9. Verteilvorrichtung gemäss einem der vorangehenden Ansprüche, **dadurch gekennzeichnet, dass** im Bereich der Auslässe (21) eine zusätzliche Leitfläche (5) anbringbar ist, an der Leitelemente (51) zur Verlängerung der Rinnen (4) angeordnet sind.

10. Verteilvorrichtung gemäss Anspruch 9, **dadurch gekennzeichnet, dass** die Leitfläche (5) und die Leitelemente (51) aus Metall und/oder Kunststoff ausgebildet sind.

11. Verteilvorrichtung gemäss der Ansprüche 9 und 10, **dadurch gekennzeichnet, dass** zwischen den Rinnen (4) im Bereich der Auslässe (21) Schlitze (41) vorhanden sind, in welche die Leitelemente (51) eingreifen.

12. Verteilvorrichtung gemäss Anspruch 11, **dadurch gekennzeichnet, dass** die Schlitze (41) und die Leitelemente (51) derart ausgebildet sind, dass die Leitelemente (41) im Bereich der Auslässe (21) die Rinnen (4) in Längsrichtung des Kegelsektors bzw. Kegelkeils (3) nicht überragen.

13. Verteilvorrichtung gemäss einem der vorangehenden Ansprüche, **dadurch gekennzeichnet, dass** die Verteilvorrichtung (1) in einem Gehäuse angeordnet ist.

14. Verfahren zur Herstellung einer Verteilvorrichtung (1) für feststoffhaltige Flüssigkeiten nach einem der vorangehenden Ansprüche, wobei die Verteilvorrichtung (1) mittels additiver Fertigung, insbesondere mittels eines 3D-Druckverfahrens, oder mittels Druckguss hergestellt wird.

## Claims

1. Distribution device (1) for liquids containing solids, in particular liquid manure, comprising
- at least one inlet opening (2) for the introduction of liquids containing solids,
- a plurality of outlets (21), and
- a plurality of gutters (4),
whereby the channels (4) are concave,
wherein each of the channels (4) has a first end in the region of the inlet (2) and a second end in the region of the outlet (21),
wherein the channels (4) are deeper in the region of the outlet (21) than in the region of the inlet (2), and
wherein the channels (4) converge towards a common point (31) in the region of the inlet (2), **characterised in that** the basic shape in the region of the channels (4) essentially corresponds to that of a conical sector or a conical wedge (3), with a conical sector tip or conical wedge tip (31), a conical sector base surface (32) and a single or double-curved lateral surface (33).

2. Distribution device according to one of the preceding claims, **characterised in that** the inlet opening (2) is aligned with the channels (4), in particular with the conical sector tip or conical wedge tip (31).

3. Distributor device according to one of the preceding claims, **characterised in that** the conical sector or the conical wedge (3) has:
- a sector angle or wedge angle of ≤ 180°, and/or
- a cone sector height or cone wedge height between 10 cm and 80 cm, preferably between 12 and 30 cm, and/or
- a cone sector radius between 8 cm and 30 cm, preferably between 10 and 20 cm.

4. Distribution device according to one of the preceding claims, **characterised in that** the channels (4) are formed as recesses in the lateral surface (33),
wherein the grooves (4) essentially run in the longitudinal direction of the conical sector or wedge (3), whereby the channels (4) are concave,
wherein the grooves (4) are designed to taper towards the conical sector tip or conical wedge tip (31),
wherein the depth of the grooves (4) preferably increases continuously from the cone sector tip (31) to the cone sector base surface, or from the cone wedge tip (31) to the cone wedge base surface.

5. Distribution device according to one of the preceding claims, **characterised in that** the channels (4) are fluid-connected to the outlets (21).

6. Distribution device according to one of the preceding claims, **characterised in that** a coupling for a hose is formed in the region of the inlet (2).

7. Distribution device according to one of the preceding claims, **characterised in that** the distribution device (1) is formed in one piece.

8. Distribution device according to one of the preceding claims, **characterised in that** the distribution device (1) is essentially made of plastic, preferably of polyamide, particularly preferably of polyamide 12, or of metal or a metal alloy, in particular of aluminium, zinc or magnesium or of an aluminium alloy, a zinc alloy or silicon tombac.

9. Distribution device according to one of the preceding claims, **characterised in that** an additional guide surface (5) can be attached in the region of the outlets (21), on which guide elements (51) are arranged to extend the channels (4).

10. Distribution device according to claim 9, **characterised in that** the guide surface (5) and the guide elements (51) are made of metal and/or plastic.

11. Distribution device according to claims 9 and 10, **characterised in that** slots (41) are provided between the channels (4) in the region of the outlets (21), in which slots the guiding elements (51) engage.

12. Distribution device according to claim 11, **characterised in that** the slots (41) and the guiding elements (51) are designed in such a way that the guiding elements (41) in the region of the outlets (21) do not project beyond the channels (4) in the longitudinal direction of the conical sector or conical wedge (3).

13. Distribution device according to one of the preceding claims, **characterised in that** the distribution device (1) is arranged in a housing.

14. Method for producing a distribution device (1) for liquids containing solids according to one of the preceding claims, wherein the distribution device (1) is produced by means of additive manufacturing, in particular by means of a 3D printing process, or by means of die casting.

## Revendications

1. Dispositif de distribution (1) pour des liquides contenant des matières solides, en particulier du lisier, comprenant
- au moins une ouverture d'entrée (2) pour l'introduction de liquides contenant des matières solides,
- une pluralité de sorties (21), et
- une pluralité de gouttières (4),
les gouttières (4) étant concaves,
chacune des goulottes (4) ayant une première extrémité dans la zone de l'entrée (2) et une deuxième extrémité dans la zone de la sortie (21),
les gouttières (4) étant plus profondes dans la zone de la sortie (21) que dans la zone de l'entrée (2), et
les goulottes (4) convergeant vers un point commun (31) dans la zone de l'entrée (2), **caractérisé en ce que** la forme de base dans la zone des goulottes (4) correspond essentiellement à celle d'un secteur conique ou d'un coin conique (3), avec une pointe de secteur conique ou une pointe de coin conique (31), une surface de base de secteur conique (32) et une surface d'enveloppe (33) à courbure simple ou double.

2. Dispositif de distribution selon l'une des revendications précédentes, **caractérisé en ce que** l'ouverture d'entrée (2) est orientée vers les gouttières (4), en particulier vers la pointe du secteur conique ou la pointe du coin conique (31).

3. Dispositif de distribution selon l'une quelconque des revendications précédentes, **caractérisé en ce que** le secteur conique ou le coin conique (3) comporte :
- un angle de secteur ou angle de coin de ≤ 180°, et/ou
- une hauteur de secteur conique ou une hauteur de coin conique comprise entre 10 cm et 80 cm, de préférence entre 12 et 30 cm, et/ou
- un rayon de secteur conique compris entre 8 cm et 30 cm, de préférence entre 10 et 20 cm.

4. Dispositif de distribution selon l'une des revendications précédentes, **caractérisé en ce que** les gouttières (4) sont réalisées sous forme de creux dans la surface d'enveloppe (33),
les gouttières (4) étant sensiblement dans la direction longitudinale du secteur ou coin de cône (3),
les gouttières (4) étant concaves,
les gouttières (4) étant conçues pour converger vers la pointe du secteur conique ou la pointe du coin conique (31),
la profondeur des gouttières (4) augmentant de préférence de manière continue de la pointe du secteur conique (31) à la surface de base du secteur conique, ou de la pointe du coin conique (31) à la surface de base du coin conique.

5. Dispositif de distribution selon l'une des revendications précédentes, **caractérisé en ce que** les goulottes (4) sont en communication fluidique avec les sorties (21).

6. Dispositif de distribution selon l'une des revendications précédentes, **caractérisé en ce qu'**un accouplement pour un tuyau flexible est formé dans la zone de l'entrée (2).

7. Dispositif de distribution selon l'une des revendications précédentes, **caractérisé en ce que** le dispositif de distribution (1) est réalisé d'une seule pièce.

8. Dispositif de distribution selon l'une des revendications précédentes, **caractérisé en ce que** le dispositif de distribution (1) est essentiellement réalisé en matière plastique, de préférence en polyamide, de manière particulièrement préférée en polyamide 12, ou en métal ou en un alliage de métaux, en particulier en aluminium, en zinc ou en magnésium, respectivement en un alliage d'aluminium, en un alliage de zinc ou en tombak de silicium.

9. Dispositif de distribution selon l'une des revendications précédentes, **caractérisé en ce qu'**une surface de guidage supplémentaire (5) peut être appliquée dans la zone des sorties (21), sur laquelle sont disposés des éléments de guidage (51) pour prolonger les goulottes (4).

10. Dispositif de distribution selon la revendication 9, **caractérisé en ce que** la surface de guidage (5) et les éléments de guidage (51) sont réalisés en métal et/ou en matière plastique.

11. Dispositif de distribution selon les revendications 9 et 10, **caractérisé en ce qu'**il existe entre les goulottes (4), au niveau des sorties (21), des fentes (41) dans lesquelles s'engagent les éléments de guidage (51).

12. Dispositif de distribution selon la revendication 11, **caractérisé en ce que** les fentes (41) et les éléments de guidage (51) sont conçus de telle sorte que les éléments de guidage (41) ne dépassent pas les gouttières (4) dans la direction longitudinale du secteur conique ou du coin conique (3) dans la zone des sorties (21).

13. Dispositif de distribution selon l'une des revendications précédentes, **caractérisé en ce que** le dispositif de distribution (1) est disposé dans un boîtier.

14. Procédé de fabrication d'un dispositif de distribution (1) pour des liquides contenant des matières solides selon l'une des revendications précédentes, dans lequel le dispositif de distribution (1) est fabriqué par fabrication additive, en particulier par un procédé d'impression 3D, ou par moulage sous pression.
